# EUROPÄISCHE PATENTANMELDUNG

(11) **EP 0 964 601 A2**
(43) Veröffentlichungstag der Anmeldung: **15.12.1999**
(21) Anmeldenummer: 99106764.6
(22) Anmeldetag: 03.04.1999
(51) Int. Cl.: H04Q 11/04

(54) **Verfahren zur Weitergabe einer auszuführenden Anwendung an eine Baugruppe eines Schalters eines Kommunikationssystems**

(30) Priorität: 08.06.1998 DE 19825466
(71) Anmelder: ROBERT BOSCH GMBH, 70442 Stuttgart (DE)
(72) Erfinder: Weis, Peter, 63303 Dreieich (DE)

(57) **Zusammenfassung**

Es ist ein Verfahren zur Weitergabe einer auszuführenden Anwendung an eine Baugruppe (c) eines eine Mehrzahl von Baugruppen (2) aufweisenden Schalters eines Kommunikationssystems beschrieben. Jede Baugruppe (2) weist mindestens einen Prozessor und eine Mehrzahl von Kanälen zum Aufbau von Verbindungen innerhalb des Kommunikationssystems auf. Durch eine der Baugruppen (b) wird geprüft, ob eine der Mehrzahl der Baugruppen (2) die zur Ausführung der Anwendung erforderliche Kapazität aktuell zur Verfügung stellen kann. Die Anwendung wird an eine derjenigen Baugruppen (2) zur Ausführung weitergegeben, die dies erfüllen.

## Beschreibung

### Stand der Technik

Die Erfindung betrifft ein Verfahren zur Weitergabe einer auszuführenden Anwendung an eine Baugruppe eines eine Mehrzahl von Baugruppen aufweisenden Schalters eines Kommunikationssystems, wobei jede Baugruppe mindestens einen Prozessor und eine Mehrzahl von Kanälen zum Aufbau von Verbindungen innerhalb des Kommunikationssystems aufweist.

Die Aufgabe eines Telekommunikationssystems besteht insbesondere darin, bspw. eine Vielzahl von Fernsprechteilnehmern derart miteinander zu verbinden, dass jeder dieser Fernsprechteilnehmer mit jedem anderen Fernsprechteilnehmer kommunizieren kann. Damit dies möglich ist, sind Schalter erforderlich, mit deren Hilfe die jeweils erforderlichen Verbindungen zwischen zwei Fernsprechteilnehmern hergestellt werden können. Derartige Schalter sind modular aus einzelnen Baugruppen aufgebaut, wobei die Baugruppen bspw. über ein Koppelfeld oder einen Bus miteinander verbunden sind. Jede Baugruppe kann mit einer Anzahl von Fernsprechteilnehmern und/oder anderen Baugruppen verbunden werden. Zwischen den angeschlossenen Fernsprechteilnehmern und/oder anderen Baugruppen können gleichzeitig eine Mehrzahl von erwünschten Verbindungen aufgebaut werden. Zu diesem Zweck besitzt jede der Baugruppen eine sog. Kanalkapazität, die die maximale Anzahl gleichzeitiger Verbindungen durch die zugehörige Baugruppe darstellt. Ebenfalls weist jede der Baugruppen einen oder mehrere Prozessoren auf, mit denen einerseits vermittlungstechnische Aufgabe ausgeführt werden, wie bspw. Signalisierungen während des Aufbaus einer Verbindung zwischen zwei Fernsprechteilnehmern, von denen jedoch andererseits auch lokale Aufgaben, wie bspw. allgemeine Steuer- und/oder Kontrollaufgaben übernommen werden. Desweiteren ist es möglich, dass von den Prozessoren zusätzlich noch Anwendungen ausgeführt werden, wie bspw. die Zurverfügungstellung eines Telefonbuchs oder die Abrechnung von Telefongesprächen und dergleichen. Die in einer Baugruppe vorhandenen Prozessoren stellen insgesamt eine maximale Prozessorleistung zur Verfügung, durch die eine mögliche Übernahme und Ausführung von vorstehend genannten Aufgaben begrenzt wird.

Bei einem Kommunikationssystem der beschriebenen Art ist es wesentlich, dass möglichst viel erwünschte Verbindungen zwischen Fernsprechteilnehmern gleichzeitig über die Schalter aufgebaut werden können. Zu diesem Zweck ist in einer der Baugruppen jedes Schalters ein Prozessor zur Ausführung einer zentralen Betriebsmittelverwaltung vorgesehen. Soll eine neue Verbindung zwischen zwei Fernsprechteilnehmern aufgebaut werden, so wird bei dieser zentralen Betriebsmittelverwaltung angefragt, ob die angeforderte neue Verbindung mit den aktuell vorhandenen Kanalkapazitäten der Baugruppen des Schalters aufgebaut werden kann. Ist ausreichend Kanalkapazität innerhalb einer der Baugruppen vorhanden, so wird diese Baugruppe von der zentralen Betriebsmittelverwaltung dazu beauftragt, die erwünschte Verbindung zwischen den Fernsprechteilnehmern aufzubauen. Für die Abschätzung der aktuell vorhandenen Kanalkapazitäten der jeweiligen Baugruppen, wie auch zur Abschätzung der für die neue aufzubauende Verbindung erforderlichen Kanalkapazitäten sind standardisierte sogenannte Verkehrsparameter vorgesehen, die die zentrale Betriebsmittelverwaltung von den anderen Baugruppen empfängt.

Es ist möglich, dass durch Anwendungen, die auf einer bestimmten Baugruppe ausgeführt werden, die Prozessorleistung dieser Baugruppe wesentlich reduziert wird. Soll nun eine neue, weitere Anwendung zur Ausführung kommen, so besteht die Möglichkeit, dass die Prozessorleistung der genannten Baugruppe nicht mehr ausreichend ist, um diese neue Anwendung auszuführen. In diesem Fall ist es erforderlich, dass die neue, auszuführende Anwendung an eine Baugruppe weitergegeben wird, die noch genügend aktuelle Prozessorleistung besitzt, um die Anwendung auszuführen.

Aufgabe der Erfindung ist es, ein Verfahren zu schaffen, mit dem eine auszuführende Anwendung an eine Baugruppe weitergegeben werden kann, die die für die Ausführung der Anwendung erforderliche Kapazität aufweist.

Diese Aufgabe wird bei einem Verfahren der eingangs genannten Art erfindungsgemäß dadurch gelöst, dass durch eine der Baugruppen geprüft wird, ob eine der Mehrzahl der Baugruppen die zur Ausführung der Anwendung erforderliche Kapazität aktuell zur Verfügung stellen kann, und dass die Anwendung an eine derjenigen Baugruppen zur Ausführung weitergegeben wird, die dies erfüllen.

Erfindungsgemäß wird also ein Auswahlverfahren zur Verfügung gestellt, mit dessen Hilfe diejenigen Baugruppen ausgewählt werden können, die die für die Ausführung der Anwendung erforderliche Kapazität besitzen. Die neue, auszuführend Anwendung kann damit an diejenige Baugruppe weitergegeben werden, die insbesondere die zur Ausführung erforderliche Prozessorleistung aktuell zur Verfügung stellen kann. Auf diese Weise wird vermieden, dass eine der Baugruppen durch die Ausführung von Anwendungen überlastet oder gar blockiert wird. Ebenfalls wird dadurch erreicht, dass in jeder der Baugruppen immer ausreichend Prozessorleistung noch vorhanden ist, um die für den Aufbau von Verbindungen zwischen Fernsprechteilnehmern erforderlichen Aufgaben, bspw. Signalisierungen und dgl. auszuführen. Die Erfindung trägt also insgesamt dazu bei, dass die innerhalb des Kommunikationssystems anstehenden Aufgaben, insbesondere die innerhalb des Kommunikationssystems auszuführenden Anwendungen möglichst gleichmäßig auf die vorhandenen Baugruppen verteilt werden. Daraus ergibt sich eine gleichmäßige Lastverteilung innerhalb des Kommunikationssystems, durch die eine hohe Verfügbarkeit, insbesondere eine große Anzahl gleichzeitiger Verbindungen zwischen Fernsprechteilnehmern erreicht werden kann.

Bei einer vorteilhaften Weiterbildung der Erfindung wird die Anwendung an diejenige Baugruppe zur Ausführung weitergegeben, die die zur Ausführung der Anwendung erforderliche Kapazität am geeignetsten aktuell zur Verfügung stellen kann. Wären an sich mehrere der Baugruppen im Hinblick auf ihre aktuell zur Verfügung stehende Prozessorleistung ansich dazu geeignet, die neue, auszuführende Anwendung zu übernehmen, so wird erfindungsgemäß diejenige Baugruppe ausgewählt, die von den möglichen Baugruppen am geeignetsten erscheint. Als Kriterium kann dabei die aktuell vorhandene Prozessorleistung der jeweiligen Baugruppe herangezogen werden. Es ist jedoch ebenfalls möglich, dass weitere Leistungsparameter bei der Bestimmung der geeignetsten Baugruppe eine Rolle spielen. Durch die erfindungsgemäße Bestimmung einer geeignetsten Baugruppe wird erreicht, dass immer diejenige Baugruppe mit der auszuführenden Anwendung betraut wird, die hierfür bspw. am meisten verfügbare Prozessorleistung aufweist. Damit wird gleichzeitig gewährleistet, dass die Lastverteilung zwischen den einzelnen Baugruppen nicht zu stark voneinander differiert.

Bei einer weiteren vorteilhaften Weiterbildung der Erfindung wird die zur Ausführung der Anwendung erforderliche Kapazität aus der erforderlichen Kapazität des ausführenden Prozessors und der erforderlichen Kapazität der ausführenden Kanäle ermittelt. Bei der erfindungsgemäßen Prüfung, ob eine bzw. welche der Baugruppen die zur Ausführung der Anwendung erforderliche Kapazität aktuell zur Verfügung stellen kann, wird somit einerseits die Prozessorleistung sowie andererseits die Kanalkapazität der jeweiligen Baugruppen berücksichtigt. Damit wird gewährleistet, dass die Übernahme der auszuführenden Anwendung durch eine der Baugruppen insbesondere keine negativen Folgen im Hinblick auf die Fähigkeit der Baugruppe hat, möglichst viele gleichzeitige Verbindungen zwischen Fernsprechteilnehmern aufzubauen.

Besonders vorteilhaft ist es, wenn die erforderliche Kapazität des ausführenden Prozessors und/oder die erforderliche Kapazität der ausführenden Kanäle als Parameter der auszuführenden Anwendung hinzugefügt werden. Erfindungsgemäß wird also der neuen, auszuführenden Anwendung bspw. jeweils ein Parameter angefügt, der die Prozessorleistung bzw. die Kanalkapazität angibt, die zur Ausführung der neuen Anwendung erforderlich sind. Dieser bzw. diese Parameter können dann von der prüfenden Baugruppe als Auswahlkriterium verwendet werden. Auf dieser Grundlage kann die erfindungsgemäße Überprüfung ausgeführt werden, ob eine der Mehrzahl der Baugruppen die zur Ausführung der Anwendung erforderliche Kapazität aktuell zur Verfügung stellen kann. Es ist somit nicht erforderlich, dass von der prüfenden Baugruppe auf irgendeine Weise ermittelt wird, welche Prozessorleistung bzw. Kanalkapazität für die Ausführung der neuen Anwendung erforderlich ist. Stattdessen sind diese Angaben über die erforderliche Kapazität der neuen Anwendung hinzugefügt, so dass die prüfende Baugruppe auf dieser Grundlage die genannte Überprüfung durchführen kann.

Bei einer ersten vorteilhaften Ausgestaltung der Erfindung wird bei der die Prüfung durchführenden Baugruppe von anderen Baugruppen angefragt, an welche Baugruppe die Anwendung zur Ausführung weitergegeben werden kann.

Die prüfende Baugruppe ist somit zentral für die erfindungsgemäße Prüfung zuständig. Will irgendeine andere Baugruppe eine Anwendung neu zur Ausführung bringen, so fragt diese andere Baugruppe bei der zentralen Baugruppe an, an welche der Baugruppen die Anwendung weitergegeben werden kann. Die zentrale Baugruppe prüft dann entsprechend dem erfindungsgemäßen Verfahren, ob eine bzw. welche der Baugruppen die zur Ausführung der Anwendung erforderliche Kapazität aktuell zur Verfügung stellen kann. An diese ausgewählte Baugruppe wird dann die neue Anwendung zur Ausführung weitergegeben.

Die beschriebene erste Ausgestaltung der Erfindung hat den Vorteil, dass nur in der zentralen Baugruppe ein gewisser Aufwand getrieben werden muss, um die erfindungsgemäße Lastverteilung zu erreichen. In den anderen Baugruppen ist hierzu jedoch nahezu kein Aufwand erforderlich. Ebenfalls hat die genannte Ausgestaltung den Vorteil, dass in der zentralen Baugruppe immer sämtliche Informationen über die aktuelle Lastverteilung, insbesondere über die aktuell noch vorhandenen Prozessorleistungen der einzelnen Baugruppen vorhanden sind. Dies erleichtert die Überwachung der Lastverteilung und die Vergabe von neuen Anwendungen an bestimmte Baugruppen wesentlich. Ein weiterer Vorteil besteht darin, dass die Parameter, die die erforderliche Kapazität der neuen, auszuführenden Anwendung kennzeichnen, zusammen mit der Anfrage von der anfragenden Baugruppe an die zentrale Baugruppe übermittelt werden können. Es sind also keinerlei besondere Maßnahmen erforderlich, um diese Parameter derjenigen Baugruppe zur Verfügung zu stellen, die die erfindungsgemäße Überprüfung durchführt.

Bei einer vorteilhaften Weiterbildung der Erfindung wird durch die prüfende Baugruppe ebenfalls geprüft, ob eine angeforderte neue Verbindung mit den aktuell vorhandenen freien Kanälen der Baugruppen aufgebaut werden kann. Die zentrale Baugruppe, durch die die Weitergabe einer neuen, auszuführenden Anwendung an eine der Baugruppen überprüft und entschieden wird, führt also gleichzeitig die eingangs erwähnte zentrale Betriebsmittelverwaltung durch. Erfindungsgemäß wird somit eine zentrale Baugruppe geschaffen, die einerseits bei neuen angeforderten Verbindungen prüft, ob die hierzu notwendigen freien Kanäle auf einer Baugruppe vorhanden sind, und die andererseits bei neuen auszuführenden Anwendungen diejenige Baugruppe auswählt, die die hierzu erforderliche Kapazität besitzt. Durch die Konzentration all dieser zentralen Aufgaben innerhalb einer Baugruppe wird erreicht, dass nur diese Baugruppe mit der Durchführung dieser zentralen Aufgaben beschäftigt ist. Die anderen Baugruppen müssen nahezu keinen Aufwand für die Durchführung derartiger Aufgaben betreiben. Dies vereinfacht den systematischen Aufbau und insbesondere das Zusammenwirken der Mehrzahl der Baugruppen.

Besonders vorteilhaft ist es, wenn die die erforderliche Kapazität der ausführenden Kanäle kennzeichnenden Parameter entsprechend denjenigen Parametern gewählt werden, die der Prüfung, ob eine angeforderte neue Verbindung aufgebaut werden kann, zugrundeliegen. Soll eine neue Verbindung aufgebaut werden, so werden insbesondere die hierzu erforderlichen Kanalkapazitäten der zugehörigen Anfrage an die zentrale Betriebsmittelverwaltung hinzugefügt. Desweiteren erhält die zentrale Betriebsmittelverwaltung bspw. zyklisch von allen Baugruppen Informationen darüber, welche Kanalkapazitäten aktuell in den einzelnen Baugruppen vorhanden sind. Auf der Grundlage dieser Informationen bestimmt dann die zentrale Betriebsmittelverwaltung diejenige Baugruppe, die für den Aufbau der erwünschten Verbindung am besten geeignet ist. Für die Übermittlung der genannten Informationen sind standardisierte Parameter vorgesehen. Erfindungsgemäß werden nun gleichartige oder zumindest ähnliche Parameter geschaffen, mit deren Hilfe insbesondere gekennzeichnet werden kann, welche Prozessorleistung für die Ausführung einer Anwendung erforderlich ist, bzw. welche Prozessorleistung in den einzelnen Baugruppen aktuell noch vorhanden ist. Wie bereits erwähnt, wird der Parameter, der die erforderliche Prozessorleistung für die Ausführung der neuen, auszuführenden Anwendung angibt, der Anfrage an die zentrale Baugruppe hinzugefügt. Desweiteren erhält die zentrale Baugruppe von den anderen Baugruppen, bspw. zyklisch, Informationen über die jeweilige aktuelle, noch zur Verfügung stehende Prozessorleistung der jeweiligen Baugruppe. Aus diesen Informationen kann dann die zentrale Baugruppe bestimmen, welche der Baugruppen am besten dazu geeignet ist, die neue, auszuführende Anwendung zu übernehmen.

Besonders vorteilhaft ist es, wenn die prüfende Baugruppe durch die zentrale Vergabe von Kanälen und/oder Anwendungen Kenntnis über die aktuelle Kapazitätsauslastung aller Baugruppen besitzt und Anwendungen ohne vorherige Anfragen weitergeben kann.

Bei einer zweiten vorteilhaften Ausgestaltung der Erfindung wird durch die prüfende Baugruppe jeweils eine Anfrage an alle anderen Baugruppen ausgegeben, und es wird die aktuell zur Verfügung stehende Kapazität der Baugruppen aus den Antwortzeiten der Baugruppen auf die Anfragen ermittelt.

Erfindungsgemäß kann jede der Baugruppen die Überprüfung durchführen, ob eine bzw. welche der Baugruppen am besten zur Ausführung einer neuen, auszuführenden Anwendung geeignet ist. Die genannte Überprüfung wird also dezentralisiert. Erfindungsgemäß wird die Überprüfung dabei derart vorgenommen, dass diejenige Baugruppe, die eine neue Anwendung zur Ausführung bringen will, jeweils eine Anfrage an alle anderen Baugruppen ausgibt. Alle anderen Baugruppen sind derart eingerichtet, dass sie auf die eingehende Anfrage sofort antworten. Dies hat zur Folge, dass die anfragende Baugruppe schon nach kurzer Zeit von allen anderen Baugruppen Antworten erhält. Aufgrund der Auslastung der einzelnen Baugruppen werden die Antworten zu verschiedenen Zeitpunkten erzeugt. Eine Baugruppe mit einer hohen Auslastung kann eine Antwort nicht sofort, sondern erst nach einer gewissen Zeit erzeugen. Dies hat zur Folge, dass die Antworten bei der anfragenden Baugruppe nacheinander eingehen. Aus den unterschiedlichen Antwortzeiten kann die anfragende Baugruppe auf die jeweiligen Auslastungen der antwortenden Baugruppen schließen. Erfindungsgemäß wird die auszuführende neue Anwendung an diejenige Baugruppe weitergegeben, die die geringste Antwortzeit aufweist.

Der Vorteil der genannten zweiten Ausgestaltung der Erfindung liegt insbesondere in der Einfachheit der beschriebenen Vorgehensweise. Es reicht aus, dass Anfragen an die anderen Baugruppen ausgesendet werden, und dass aus den daraus resultierenden Antwortzeiten die am geeignetsten erscheinende Baugruppe ausgewählt wird. Der Aufwand für die Durchführung dieser Vorgehensweise ist ersichtlich gering. Ebenfalls ist es bei dieser Vorgehensweise nicht erforderlich, dass die für die Ausführung der neuen Anwendung erforderliche Prozessorleistung in irgendeiner Weise bekannt sein muss oder weitergegeben werden muss.

Besonders vorteilhaft ist, wenn durch diejenige Baugruppe die Anfrage an alle anderen Baugruppen ausgegeben wird, die die Anwendung zur Ausführung weitergeben will. Wie bereits erwähnt, wird dadurch die Weitergabe der neuen, auszuführenden Anwendung dezentralisiert.

Bei einer vorteilhaften Weiterbildung der Erfindung werden die Anfragen von einer der Baugruppen unabhängig von der Ausführung einer Anwendung, insbesondere zyklisch, an alle anderen Baugruppen ausgegeben. Auf diese Weise erhält die ausgebende Baugruppe ein Abbild über die Lastverteilung innerhalb der Baugruppen. Aus den Antwortzeiten zu den jeweiligen, zyklisch durchgeführten Anfragen, kann die ausgebende Baugruppe auf die jeweils aktuelle Lastverteilung schließen. Durch die zyklische Wiederholung der Ausgabe der Anfragen an die anderen Baugruppen wird erreicht, dass die ausgebende Baugruppe die Lastverteilungen in aufeinanderfolgenden Zeitpunkten ermitteln kann, so dass daraus die Veränderungen der Lastverteilungen zwischen den einzelnen Baugruppen erkannt werden können. Durch die genannte erfindungsgemäße Weiterbildung ist es somit möglich, dass die jeweils aktuelle Lastverteilung fortlaufend ermittelt werden kann.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild von erfindungsgemäßen Baugruppen eines Schalters eines Kommunikationssystems,
- Figur 2: zeigt ein schematisches Blockschaltbild eines ersten Ausführungsbeispiels eines erfindungsgemäßen Verfahrens zur Weitergabe einer auszuführenden Anwendung an eine der Baugruppen der Figur 1, und
- Figur 3: zeigt ein schematisches Blockschaltbild eines zweiten Ausführungsbeispiels eines erfindungsgemäßen Verfahrens zur Weitergabe einer auszuführenden Anwendung an eine der Baugruppen der Figur 1.

Ein Kommunikationssystem ist dazu vorgesehen, bspw. eine Vielzahl von Fernsprechteilnehmern miteinander zu koppeln. Zu diesem Zweck weist das Kommunikationssystem eine Mehrzahl von Schaltern auf, die dazu geeignet sind, gleichzeitig eine Vielzahl von bspw. paarweisen Verbindungen von Fernsprechteilnehmern herzustellen. Für die Übertragung von Informationen zwischen den einzelnen Fernsprechteilnehmern über das Kommunikationsnetz gibt es verschiedene Verfahren, bspw. auch den sog. "Asynchronous Transfer Mode" (ATM). Im letztgenannten Fall werden die in dem Kommunikationssystem vorhandenen Schalter als ATM-Schalter bezeichnet.

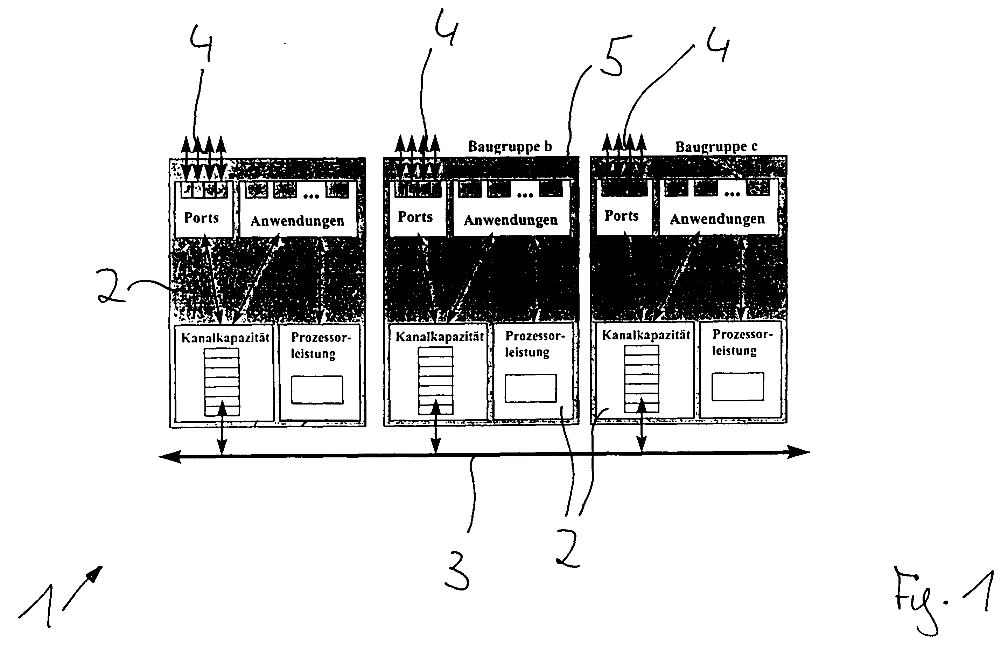

Ein Ausschnitt aus einem derartigen ATM-Schalter 1 ist in der Figur 1 dargestellt. Der gezeigte ATM-Schalter 1 ist aus einer Mehrzahl von Baugruppen 2 modulartig aufgebaut. Die einzelnen Baugruppen 2 sind durch die Kennzeichnungen a, b, c voneinander unterschieden. Die Baugruppen 2 sind über ein Koppelfeld bzw. über einen Bus 3 miteinander verbunden.

An jede der Baugruppen 2 kann eine Mehrzahl von Verbindungsleitungen 4 angeschlossen werden. Über die Verbindungsleitungen 4 kann die zugehörige Baugruppe 2 entweder mit Fernsprechteilnehmern und/oder mit anderen ATM-Schaltern 1 verbunden sein. Insgesamt ergibt sich damit innerhalb des Kommunikationssystems mit Hilfe der Baugruppen 2 der ATM-Schalter 1 ein Netzwerk, über das jeder der angeschlossenen Fernsprechteilnehmer mit jedem anderen der angeschlossenen Fernsprechteilnehmer verbunden werden kann. Dabei ist es möglich, dass eine Vielzahl derartiger paarweiser Verbindungen gleichzeitig vorhanden sein können.

Damit eine Vielzahl der genannten paarweisen Verbindungen gleichzeitig vorhanden sein können, ist es erforderlich, dass jede der Baugruppen 2 eine Mehrzahl sog. Ports sowie eine Mehrzahl von mit diesen Ports verbundenen Kanälen besitzt. Dies wird insgesamt als sog. Kanalkapazität bezeichnet. Die Kanalkapazität stellt diejenige maximale Anzahl gleichzeitiger Verbindungen dar, die über die zugehörige Baugruppe 2 aufgebaut werden können.

In jeder der Baugruppen 2 ist zumindest ein Prozessor enthalten. Dieser Prozessor besitzt eine maximale Prozessorleistung, die durch die an ihn gestellten Aufgaben verbraucht wird. Als Aufgaben ist der bzw. sind die in der jeweiligen Baugruppe enthaltenen Prozessoren einerseits dazu vorgesehen, bestimmte vermittlungstechnische Aufgaben auszuführen, wie bspw. die Signalisierung von neu aufzubauenden Verbindungen zwischen zwei Fernsprechteilnehmern. Ebenfalls ist vorgesehen, dass mit der vorhandenen Prozessorleistung gewisse Steuer- und/oder Kontrollaufgaben innerhalb der zugehörigen Baugruppe 2 ausgeführt werden.

Darüber hinaus kann jede der Baugruppen 2 mit der dort vorhandenen Prozessorleistung irgendwelche Anwendungen ausführen. Bei derartigen Anwendungen kann es sich bspw. darum handeln, dass ein Telefonbuch zur Verfügung gestellt wird, oder dass die Kosten für ein Telefongespräch berechnet werden oder dass sonstige Dienstleistungen den angeschlossenen Fernsprechteilnehmern zur Verfügung gestellt werden. Die Anwendungen können dabei nicht nur - wie erwähnt - Prozessorleistung der zugehörigen Baugruppe in Anspruch nehmen, sondern ggf. auch Kanalkapazität.

Bei dem ATM-Schalter 1 der Figur 1 ist vorgesehen, dass in der Baugruppe b eine zentrale Betriebsmittelverwaltung 5 als Anwendung untergebracht ist. Eine derartige Betriebsmittelverwaltung 5 wird auch als "Connection Admission Control" (CAC) bezeichnet. Die zentrale Betriebsmittelverwaltung 5 übernimmt dabei vermittlungstechnische Aufgaben.

Soll eine neue Verbindung zwischen zwei an das Kommunikationssystem angeschlossenen Fernsprechteilnehmern aufgebaut werden, so überprüft die zentrale Betriebsmittelverwaltung 5, ob die Kanalkapazität der für die Verbindung erforderlichen Baugruppe 2 ausreicht, um die erwünschte Verbindung aufzubauen. Zu diesem Zweck erhält die zentrale Betriebsmittelverwaltung 5 Informationen, aus denen hervorgeht, welche Kanalkapazität für die aufzubauende Verbindung erforderlich ist. Desweiteren erhält die zentrale Betriebsmittelverwaltung 5 bspw. zyklisch von den einzelnen Baugruppen 2 entsprechende Informationen, aus denen hervorgeht, welche aktuelle Kanalkapazität die einzelnen Baugruppen jeweils besitzen.

Es ist aber auch möglich, dass die zentrale Betriebsmittelverwaltung 5 durch die zentrale Vergabe von Kanälen Kenntnis über die aktuelle Kapazitätsauslastung besitzt und somit Kanäle schnell und ohne vorherige Anfrage schalten kann.

Auf der Grundlage dieser Informationen überprüft die zentrale Betriebsmittelverwaltung 5, ob eine angeforderte neue Verbindung mit den aktuell vorhandenen freien Kanälen der Baugruppe 2 aufgebaut werden kann. Ist dies der Fall, so weist die zentrale Betriebsmittelverwaltung 5 die entsprechende Baugruppe 2 an, die erwünschte neue Verbindung aufzubauen.

Soll innerhalb des Kommunikationssystems eine neue Anwendung ausgeführt werden, so kann dies auf zweierlei Weisen erfolgen.

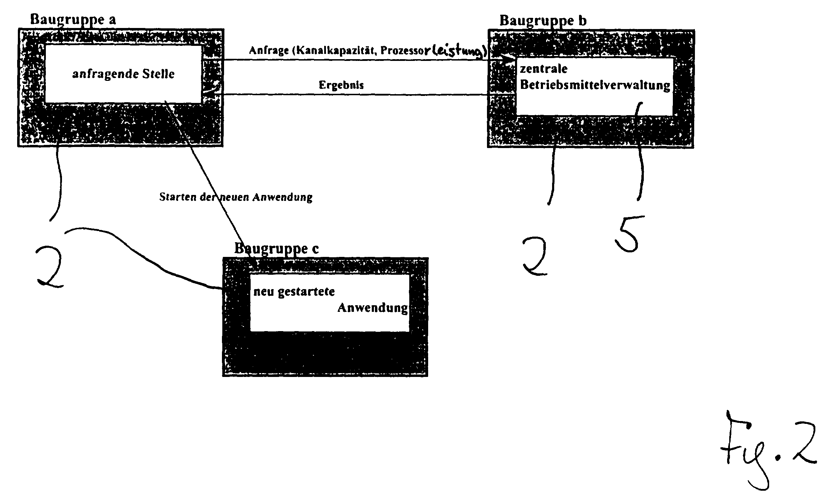

In der Figur 2 ist ein erstes Ausführungsbeispiel gezeigt, wie die genannte neue Anwendung den bereits vorhandenen Anwendungen hinzugefügt werden kann.

In der Figur 2 stellt die Baugruppe a eine anfragende Baugruppe 2 dar. Dies bedeutet, dass die Baugruppe a diejenige Baugruppe 2 ist, die die neue Anwendung in das Kommunikationssystem einführen will. Dies kann bspw. dadurch erfolgen, dass ein Benutzer dem in der Baugruppe a untergebrachten Prozessor die neue Anwendung einspielt und damit zur Verfügung stellt.

Die Baugruppe a sendet daraufhin eine Anfrage an die Baugruppe b. Bei der Baugruppe b handelt es sich um diejenige Baugruppe 2 der Figur 1, die mit der zentralen Betriebsmittelverwaltung 5 versehen ist. Zusammen mit der Anfrage sendet die Baugruppe a zwei Parameter an die Baugruppe b, die die für die Ausführung der neuen Anwendung erforderliche Kanalkapazität und Prozessorleistung angeben.

Desweiteren erhält die zentrale Betriebsmittelverwaltung 5 der Baugruppe b von den anderen Baugruppen 2 des ATM-Schalters 1 Informationen über die jeweilige aktuelle Prozessorleistung der Prozessoren der einzelnen Baugruppen 2. Die Übermittlung dieser Prozessorleistungen kann dabei mittels ähnlicher Parameter erfolgen, wie die Kanalkapazitäten an die zentrale Betriebsmittelverwaltung 5 weitergegeben werden.

Auf der Grundlage der für die Ausführung der neuen Anwendung erforderlichen Kanalkapazität und Prozessorleistung sowie auf den Informationen über die aktuellen Kanalkapazitäten und Prozessorleistungen der einzelnen Baugruppen 2 ermittelt die Baugruppe b, ob eine der Baugruppen 2 des ATM-Schalters 1 die erforderliche Kapazität aufweist, um die neue Anwendung auszuführen. Ist dies der Fall, so überprüft die zentrale Betriebsmittelverwaltung 5 der Baugruppe b, welche der Baugruppen 2 des ATM-Schalters 1 am geeignetsten ist, die neue Anwendung auszuführen. Als Kriterium für diese Auswahl kann bspw. die zur Verfügung stehende aktuelle Prozessorleistung in den einzelnen Baugruppen 2 herangezogen werden.

Als Ergebnis wird die neue, auszuführende Anwendung dann von der zentralen Betriebemittelverwaltung 5 der Baugruppe b derjenigen Baugruppe 2 zugewiesen, die bspw. die größte Prozessorleistung noch zur Verfügung hat. In der Figur 2 handelt es sich dabei um die Baugruppe c.

Dieses Ergebnis wird von der zentralen Betriebsmittelverwaltung 5 der Baugruppe b der anfragenden Baugruppe a mitgeteilt. Daraufhin übermittelt die Baugruppe a die neue Anwendung an die Baugruppe c, wo diese neue Anwendung dann von der Baugruppe c gestartet wird.

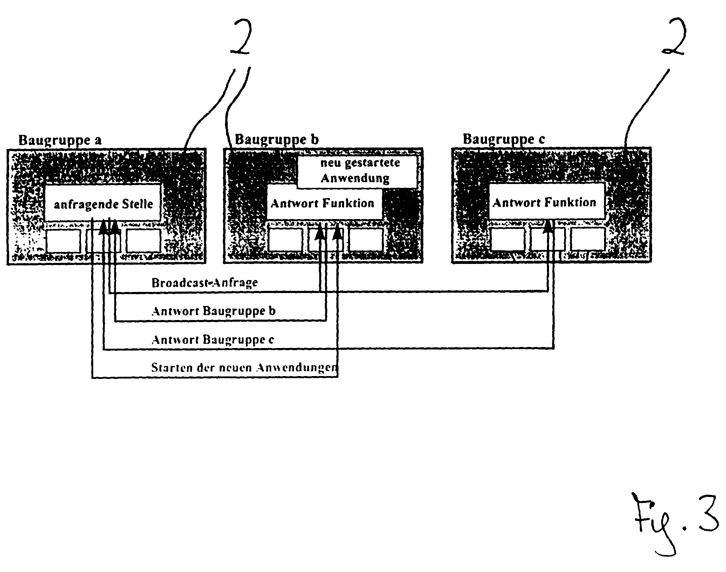

In der Figur 3 ist ein zweites Ausführungsbeispiel gezeigt, wie eine neue Anwendung in das Kommunikationssystem eingeführt werden kann.

Wie im Zusammenhang mit der Figur 2 bereits erläutert wurde, stellt die Baugruppe a eine antragende Baugruppe 2 dar, die die neue Anwendung in das Kommunikationssystem einführen will.

Die Baugruppe a erzeugt eine sog. Broadcast-Anfrage. Dies bedeutet, das ein- und dieselbe Anfrage gleichzeitig an alle anderen Baugruppen 2 ausgegeben wird. Hierzu ist es erforderlich, dass das Kommunikationssystem, insbesondere der ATM-Schalter 1 eine derartige Broadcast-Anfrage ausführen kann.

In allen Baugruppen 2 des Kommunikationsschalters 1 ist eine Anwendung vorhanden, die dazu vorgesehen ist, nach Eintreffen der Broadcast-Anfrage bei der jeweiligen Baugruppe 2 sofort eine Antwort zu erzeugen und an die anfragende Baugruppe a zurückzusenden.

Trifft nun die Broadcast-Anfrage bspw. bei der Baugruppe c ein, und ist diese Baugruppe c aktuell hoch belastet, so hat dies zur Folge, dass die genannte Anwendung nicht sofort, sondern erst mit einer kurzen Zeitverzögerung die Broadcast-Anfrage beantworten kann. Dies hat zur Folge, dass die Antwort der Baugruppe c später bei der anfragenden Baugruppe a eingeht als bspw. die entsprechende Antwort der Baugruppe b.

Aus den Zeitpunkten, in denen die Antworten der anderen Baugruppen 2 bei der Baugruppe a eingehen, also letztlich aus den Antwortzeiten der einzelnen Baugruppen 2 auf die Broadcast-Anfrage, schließt die Baugruppe a auf die Auslastung der anderen Baugruppen 2. Im vorliegenden Fall schließt die Baugruppe a aus der frühzeitigen Antwort der Baugruppe b, dass die Baugruppe b wenig ausgelastet ist, während die Baugruppe c aufgrund der späteren Antwort als höher ausgelastet betrachtet wird. In jedem Fall kann die Baugruppe a aus der Reihenfolge der eingehenden Antworten der anderen Baugruppen 2 auf eine entsprechende Auslastung der jeweiligen Baugruppen 2 schließen.

Auf dieser Grundlage kommt die Baugruppe a zu dem Ergebnis, dass die Baugruppe b am wenigsten ausgelastet ist. Die neue Anwendung wird deshalb von der Baugruppe a an die Baugruppe b übermittelt, wo sie dann von der Baugruppe b gestartet wird.

Im Unterschied zu dem Verfahren nach der Figur 2 sind bei dem Verfahren nach der Figur 3 keinerlei Informationen über die erforderliche Kanalkapazität oder Prozessorleistung für die Ausführung der neuen Anwendung notwendig. Ebenfalls ist es unerheblich, welche der Baugruppen 2 die zentrale Betriebsmittelverwaltung 5 enthält.

Das beschriebene zweite Ausführungsbeispiel der Figur 3 kann derart weiterentwickelt werden, dass die genannte Broadcast-Anfrage von irgendeiner der Baugruppen 2 zyklisch erzeugt wird. dies bedeutet, dass die anfragende Baugruppe 2 in bestimmten Zeitabständen die Broadcast-Anfrage aussendet und die entsprechenden Antworten erhält. Aus den Antworten kann dann die anfragende Baugruppe 2 auf die aktuelle Auslastung der anderen Baugruppen 2 schließen. Durch die zyklische Wiederholung der Broadcast-Anfrage kennt die anfragende Baugruppe 2 in jedem Zeitpunkt die Auslastung der anderen Baugruppen 2.

Dabei ist es möglich, dass die Broadcast-Anfrage für unterschiedliche Verkehrsklassen unterschiedlich ausgeführt wird. Insbesondere kann die Broadcast-Anfrage die gleiche Verkehrsklasse benutzen. Auf diese Weise ist es möglich, dass die jeweils aktuelle Auslastung der unterschiedlichen Sende- und Empfangspuffer für die unterschiedlichen Verkehrsklassen von der anfragenden Baugruppe 2 ermittelt wird.

## Patentansprüche

1. Verfahren zur Weitergabe einer auszuführenden Anwendung an eine Baugruppe (c; b) eines eine Mehrzahl von Baugruppen (2) aufweisenden Schalters (1) eines Kommunikationssystems, wobei jede Baugruppe (2) mindestens einen Prozessor und eine Mehrzahl von Kanälen zum Aufbau von Verbindungen innerhalb des Kommunikationssystems aufweist, dadurch gekennzeichnet, daß durch eine der Baugruppen (b; a) geprüft wird, ob eine der Mehrzahl der Baugruppen (2) die zur Ausführung der Anwendung erforderliche Kapazität aktuell zur Verfügung stellen kann, und daß die Anwendung an eine derjenigen Baugruppen (2) zur Ausführung weitergegeben wird, die dies erfüllen.

2. Verfahren nach Anspruch 1, dadurch gekennzeichnet, daß die Anwendung an diejenige Baugruppe (c; b) zur Ausführung weitergegeben wird, die die zur Ausführung der Anwendung erforderliche Kapazität am geeignetsten aktuell zur Verfügung stellen kann.

3. Verfahren nach einem der Ansprüche 1 oder 2, dadurch gekennzeichnet, daß die zur Ausführung der Anwendung erforderliche Kapazität aus der erforderlichen Kapazität des ausführenden Prozessors und der erforderlichen Kapazität der ausführenden Kanäle ermittelt wird.

4. Verfahren nach Anspruch 3, dadurch gekennzeichnet, daß die erforderliche Kapazität des ausführenden Prozessors und/oder die erforderliche Kapazität der ausführenden Kanäle als Parameter der auszuführenden Anwendung hinzugefügt werden.

5. Verfahren nach einem der Ansprüche 1 bis 4, dadurch gekennzeichnet, daß bei der die Prüfung durchführenden Baugruppe (b) von anderen Baugruppen (a) angefragt wird, an welche Baugruppe (2) die Anwendung zur Ausführung weitergegeben werden kann.

6. Verfahren nach einem der Ansprüche 1 bis 5, dadurch gekennzeichnet, daß durch die prüfende Baugruppe (b) ebenfalls geprüft wird, ob eine angeforderte neue Verbindung mit den aktuell vorhandenen freien Kanälen der Baugruppen (2) aufgebaut werden kann.

7. Verfahren nach Anspruch 6, dadurch gekennzeichnet, daß die die erforderliche Kapazität der ausführenden Kanäle kennzeichnenden Parameter entsprechend denjenigen Parametern gewählt werden, die der Prüfung, ob eine angeforderte neue Verbindung aufgebaut werden kann, zugrundeliegen.

8. Verfahren nach einem der Ansprüche 5 bis 7, dadurch gekennzeichnet, dass die prüfende Baugruppe (b) durch die zentrale Vergabe von Kanälen und/oder Anwendungen Kenntnis über die aktuelle Kapazitätsauslastung aller Baugruppen (a) besitzt und Anwendungen ohne vorherige Anfragen weitergeben kann.

9. Verfahren nach einem der Ansprüche 1 bis 4, dadurch gekennzeichnet, daß durch die prüfende Baugruppe (a) jeweils eine Anfrage an alle anderen Baugruppen (2) ausgegeben wird, und daß die aktuell zur Verfügung stehende Kapazität der Baugruppen (b, c) aus den Antwortzeiten der Baugruppen (b, c) auf die Anfragen ermittelt wird.

10. Verfahren nach Anspruch 9, dadurch gekennzeichnet, daß durch diejenige Baugruppe (a) die Anfragen an alle anderen Baugruppen (2) ausgegeben wird, die die Anwendung zur Ausführung weitergeben will.

11. Verfahren nach einem der Ansprüche 9 oder 10, dadurch gekennzeichnet, daß die Anfragen von einer der Baugruppen (2) unabhängig von der Ausführung einer Anwendung insbesondere zyklisch an alle anderen Baugruppen (2) ausgegeben werden.
